Europäisches Patentamt

(19) European Patent Office

Office européen des brevets

(11) Publication number: **0 162 607**
**A2**

## (12) EUROPEAN PATENT APPLICATION

(21) Application number: 85302935.3

(22) Date of filing: 25.04.85

(51) Int. Cl.⁴: **G 01 N 15/12**

(30) Priority: 25.04.84 GB 8410500

(43) Date of publication of application:
27.11.85 Bulletin 85/48

(84) Designated Contracting States:
CH DE FR GB IT LI NL

(71) Applicant: Orbec Limited
87 Limpsfield Road
Sanderstead Surrey, CR2 9LE(GB)

(72) Inventor: Capewell, Maurice John
519 Gander Green Lane
Cheam Surrey(GB)

(74) Representative: Tomlinson, Kerry John et al,
Frank B. Dehn & Co. European Patent Attorneys Imperial
House 15-19 Kingsway
London WC2B 6UZ(GB)

(54) **Monitoring particles in liquids.**

(57) Apparatus for monitoring particles in a liquid by passing the liquid through an orifice disposed between two electrodes 1 includes an amplifier 22-27 of restricted bandwidth arranged to receive pulse signals from the electrodes on the passage of particles through the orifice, and a d.c. restorer circuit 29 coupled to the output of the amplifier and arranged to produce signals indicative of the amplitude of the pulses. The amplifier preferably comprises in series a high pass filter 22, a wideband amplifier 23, a high pass amplifier 25, a bandpass filter 26 and a low pass amplifier 27. The apparatus is able to monitor bacteria in urine using an orifice of 100 microns diameter and is capable of automatic and unattended operation.

./...

FIG.3

ANALOGUE TO ADC

3/5

15F147-335                                        0162607

## Monitoring particles in liquids

This invention relates to apparatus and methods for monitoring particles in liquids and has particular, though not exclusive, application to the monitoring of bacteria in urine and other specimens.

The examination of urine for bacteria, especially for the detection of bacteriuria, is a very common operation in microbiological laboratories and requires a large amount of labour using conventional techniques. Typically microscopic examination and cell growth tests over one or two days are performed. In a large majority of cases no bacterial activity is found and it is felt that there is a great need for a means of automatically performing such tests. A number of test techniques have been proposed but no successful automated system is known.

The use of a particle counter has been proposed, e.g. in J. Clin. Path., 1979, 32, 386-390; in this technique a pair of electrodes are disposed one on each side of an orifice and a voltage is applied across them. The sample is passed through the orifice and the resulting impedance variations as particles pass through the orifice are detected as voltage variations across the electrodes. This technique is employed in the well known Coulter particle counters. By analysing the shape of the electrical pulse it is possible to derive a signal representing the size of the particle passing through the orifice and by the use of a channel analyser or the like it is possible to construct a size distribution profile which may enable the particles to be identified. However, a serious problem arises if it is desired to apply this technique to an automated system for monitoring bacteria in urine. This is because urine may contain a wide range of materials of greatly differing sizes, such as bacteria, yeasts, red and white blood cells, crystals and protein composites. The bacteria of interest are typically of about 0.4 - 2 microns mean diameter and blood cells may be of the order of 10 microns diameter, such as 7 - 20 microns. By employing a high-quality particle detector circuit, capable, say, of detecting particles of 2% of the orifice diameter, it may be possible to employ an orifice of up to 30 microns diameter. However, such an orifice is susceptible to blockage because of the presence of larger particles.

According to the invention there is provided a method of detecting bacteria in urine comprising passing a sample of urine, which may be diluted, through an orifice of at least 50 microns diameter, deriving an electrical signal by the use of respective electrodes disposed one on each side of the orifice, amplifying the signal using an a.c. amplifying circuit which has a restricted bandwidth, and detecting the peak height of the resulting signal. By 'restricted bandwidth' we mean having a frequency response which does not extend to very low frequencies. Preferably the diameter of the orifice is of the order of 100 microns and the amplifying circuit includes a bandpass amplifier and d.c. restorer.

Amplifiers of restricted bandwidth are not used in this application because it is known that considerable distortion of each pulse will result. However, we have realised that because the pulse amplitude is the only parameter of interest, an amplifier of restricted bandwidth can be employed which suppresses the upper harmonics of each pulse and rolls off the low frequency response but still preserves the pulse height. This results in a large improvement in the signal-to-noise ratio and enables particles of, say, 0.2% of the diameter of the orifice to be detected and to be measured 0162607
sufficiently accurately as to their size. Such
an effect has not been suggested by any prior proposals
and enables particles of a wide range of sizes to
be monitored.

In a typical application urine might be diluted
twenty times and a 50 microlitres sample passed
through a 100 micron orifice in about 3 seconds,
although of course other flow times could be used.
This might result in 50 to 500 bacteria passing
through the orifice in an infected sample and the
resulting electrical pulses might be of about 10
microseconds width. A bandpass amplifier having
a bandwidth of about 40 kHz centred on 30 kHz will
provide suitable operation in accordance with the
present invention.

It will be appreciated that as the invention
employs an orifice of greater than 50 microns diameter,
such as 100 microns, this is unlikely to become
blocked when testing urine samples, and so the
invention enables the construction of apparatus
capable of automatic and unattended operation in
testing such samples.

Viewed from another aspect, the invention
provides apparatus for monitoring particles in
a liquid by passing the liquid through an orifice
disposed between two electrodes, comprising amplifier
means arranged to receive pulse signals from the
electrodes on the passage of particles through
the orifice, the amplifier means having a restricted
bandwidth, and a d.c. restorer circuit coupled
to the output of the amplifier and arranged to produce
signals indicative of the amplitude of the pulses.

As mentioned above, the restricted bandwidth
substantially decreases the amount of noise processed
by the apparatus and enables relatively small particles
to be detected. Preferably the apparatus also
includes a pulse discriminator which is responsive to the pulses which have passed through the amplifying means and operates to reject pulses outside of a predetermined range. For example, pulses of less than a predetermined amplitude could be rejected as could pulses of less than a predetermined width (i.e. time).

Preferably the amplifier means comprises multiple stages of amplification and filtering and in one configuration a bandpass filter is positioned between two amplifier stages which themselves may have a tailored frequency response. The d.c. restorer circuit may comprise a circuit for detecting when a peak of a pulse is reached and for then clamping the a.c. coupled pulse to ground.

Viewed from another aspect, the invention provides apparatus for monitoring particles in a liquid by passing the liquid through an orifice disposed between two electrodes, comprising amplifier means arranged to receive pulse signals from the electrodes on the passage of particles through the orifice, the amplifier means including a bandpass amplifier circuit comprising in series a high pass filter, a wideband amplifier, a high pass amplifier, a bandpass filter and a low pass amplifier.

Although described mainly in connection with the monitoring of bacteria in urine, the invention may be valuable in other fields, such as monitoring bacteria in serum, surface water or nutrient media (including antibiotic sensitivity tests, drug and metabolite assay and mutagenicity screening); and for monitoring blood cells and platelets, pigment particles, particulate contaminants in liquid media and antibody antigen-coated particles and their rate of aggregation.

An embodiment of the invention will now be described by way of example and with reference to the accompanying drawings, in which:

Figure 1 is a schematic sectional view of part of a sample probe;

Figure 2 is a block diagram of monitoring apparatus in accordance with the invention;

Figure 3 is a block diagram of the probe signal input stages of the apparatus of Figure 2; and

Figures 4 and 5 together form a detailed circuit diagram of the stages of Figure 3.

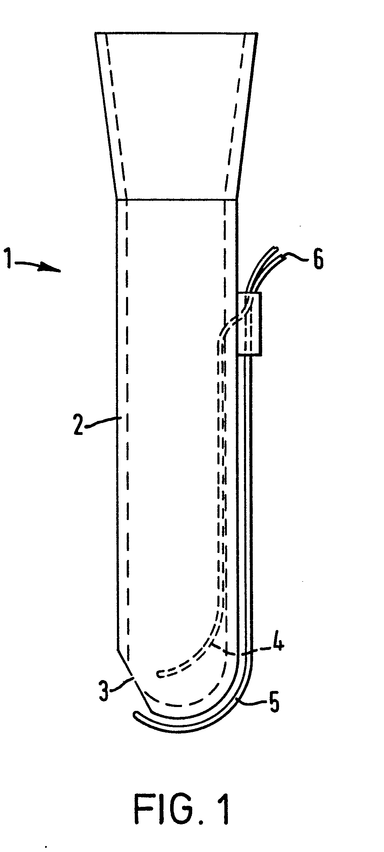

An automated monitoring apparatus for detecting and identifying bacteria in liquids, such as in urine, includes a plurality of probes each as shown in Figure 1. Each probe 1 consists of a small tube 2 formed with an orifice 3 of more than 50 microns diameter, preferably about 100 microns. A pair of electrodes 4 and 5 are positioned on opposite sides of the orifice and connected to leads 6. A connection to the electrode within the tube passes through the wall of the tube. In use a voltage is applied to the leads 6 and the sample to be monitored is drawn through the orifice 3. As each particle in the sample passes through the orifice it causes a variation in the electrical impedance between the electrodes 4 and 5 resulting in a corresponding voltage pulse across the leads 6. The orifice is of small axial extent (that is, in the flow direction) and the electrodes are positioned beyond the axial extent of the orifice and on opposite sides thereof.

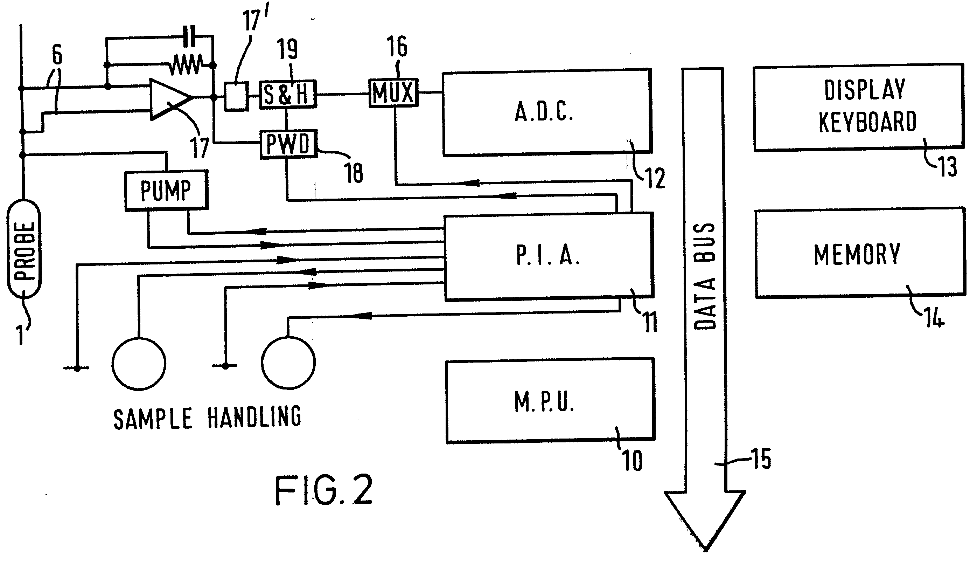

Automatic sample handling devices may be provided as indicated in Figure 2. Specifically, the probes may be automatically inserted into the samples and a pump operated to draw the samples through the orifices and subsequently the fluid passages may be sterilised.

A preferred form of the apparatus includes a microprocessor 10, peripheral interface adaptor 11, analogue-to-digital converter 12, keyboard and display 13 and memory 14 all interconnected via an address and data bus 15. As is conventional, the microprocessor 10 performs instructions provided by the memory 14 and outputs control signals via the peripheral interface adaptor 11. Probe impedance values are periodically input via the analogue-to-digital converter 12 from the respective probes 1. As an example, a 50 microlitres sample may be drawn through each probe in about 3 seconds and the microprocessor might read in 3000 or more readings from each probe in this time through multiplexer 16.

The input circuit connected to the probe leads 6 consists of an amplifying stage 17 with a restricted bandwidth and followed by a d.c. restorer circuit 17'. The output of this circuit is supplied to a noise blanker and pulse width discriminator 18 which are arranged to determine whether the received pulse falls within certain limits, e.g. that it is above a minimum height and of greater than a minimum width in time. This is to reject unwanted noise pulses. If the discriminator 18 determines that a received pulse is of acceptable size it causes a sample and hold circuit 19 to hold the peak value of the pulse voltage until it is read in to the memory 14 via multiplexer 16 and analogue-to-digital converter 12.

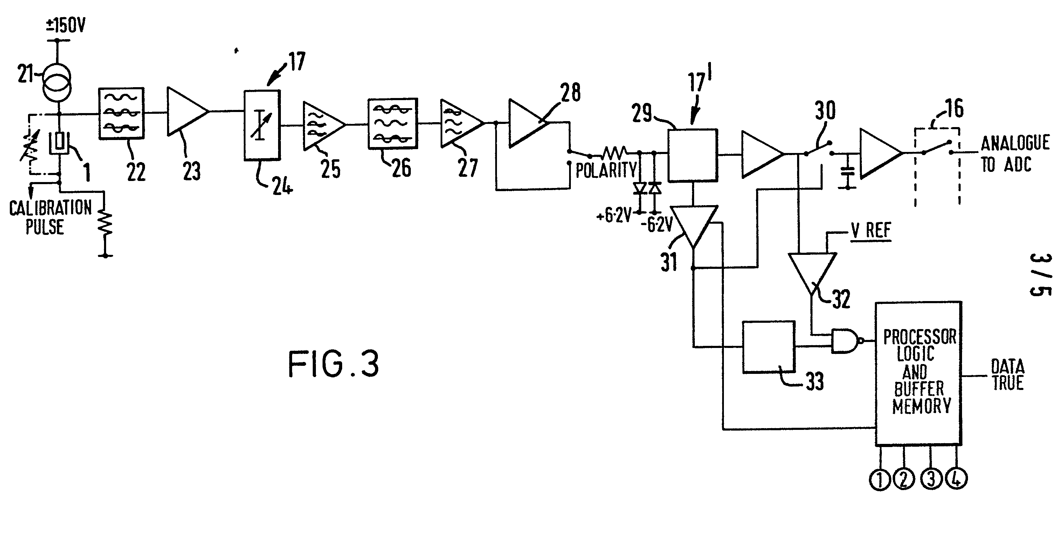

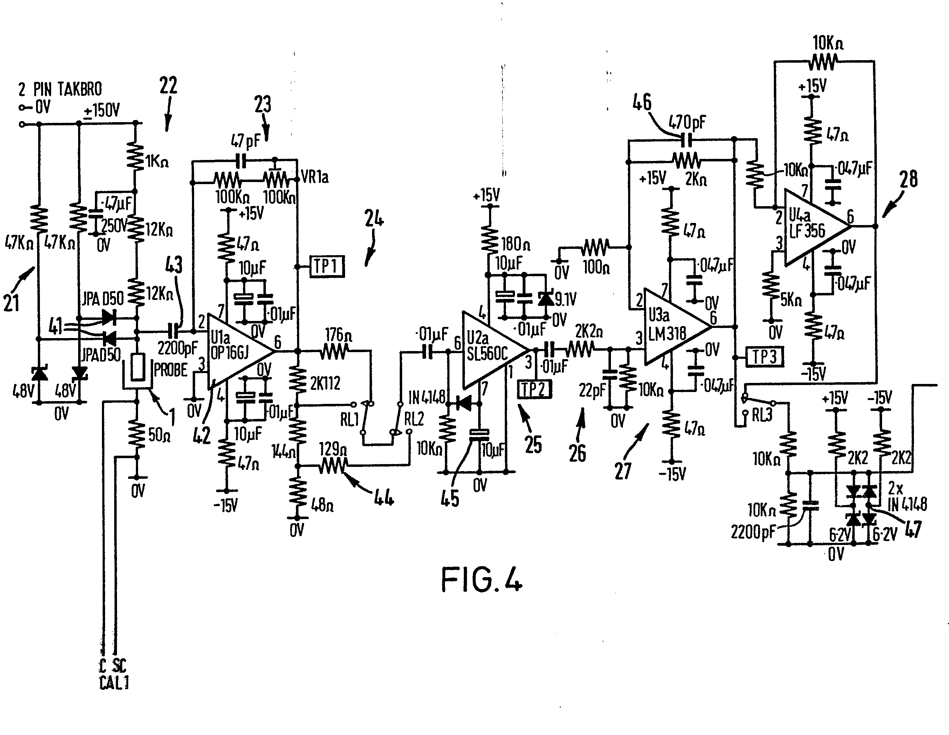

In a typical operation, a number of samples, e.g. 32, are monitored four at a time. Samples of urine are diluted twenty times before being monitored. This has the advantage of dissolving crystals and breaking down protein composites. The diluted urine is pumped through the probe orifices and analysed. It is then voided into a waste container containing a bacteriocidal agent. Pulses generated on the leads 6 correspond in number to the number of particles passing through the orifice and the amplitude of each pulse is a measure of the particle size. As mentioned above, of the order of 3000 or more readings for each sample may be made in a period of 3 seconds in which time of the order of 250 particles may be detected. Each peak amplitude reading is read via the analogue-to-digital converter and stored in random access memory as an 11-bit number. It is then allotted to one of a number of ranges or channels, e.g. 256, in the range 0 to 3 microns. At this stage a determination can rapidly be made as to whether or not bacteria are present. If they are, a particle size distribution analysis can be performed, for example by providing a histogram on display 13. It is also possible to identify bacteria and other particles automatically by comparing their size distribution with prestored profiles. In order to increase the dynamic range each sample might be processed twice or more and two or more distribution profiles produced, e.g. one in the range mentioned above for bacteria and one in the range 4 to 20 microns for yeast cells, and red and white blood cells. A printed report may be produced and the results may be transmitted via a standard communications port to a host computer or data recorder. The microprocessor may control other functions: the microprocessor may control ultra-violet sterilisation, for example at night, and it may control the provision of calibration pulses which are injected to the probe area as shown at the bottom left of Figures 3 and 4.

Turning now to Figure 3, the probe input signal circuitry comprises a constant current source 21 connected to the probe 1. The source 21 may comprise a simple resistor and diode arrangement connected to a relatively high voltage. In the preferred embodiment the voltage applied to the probe is periodically reversed to prevent electrolytic effects. Pulse signals from the probe 1 pass through a high pass filter 22 which rejects low frequency noise from the probe. The pulses are then amplified by a 30 dB gain amplifier 23. A variable attenuator 24 provides range switching. A high pass amplifier 25 provides a gain of 29 dB and this is followed by bandpass filter 26. The filter output is connected to the input of a third amplifier 27 which has a low pass response and a gain of 26 dB. Thus the overall gain is 85 dB and the overall frequency response is a restricted bandwidth, for example of 40 kHz centred on 30 kHz. An inverting amplifier 28 provides polarity switching when the polarity of the constant current source 21 is switched. The output pulses of amplifier 28 are supplied to a d.c. clamp or restorer circuit 29. This includes a circuit which switches just below each peak of a pulse and clamps the a.c. signal to ground each time the pulse moves positive, resulting in a negative going pulse relative to a base line of 0 V. A sample and hold circuit 30 is arranged to hold the pulse peak voltage when enabled by pulse amplifier 31. Pulse amplifier 31 is controlled by pulse height and pulse width discriminator circuits 32 and 33 so that only pulses above a reference level and above a certain width (e.g. 8 microseconds) are held.

The bandpass amplifier stages 22 to 27 may provide the following overall characteristics, for example: amplifier gain 85 dB; noise referred to input less than 8 microvolts; input bias current less than 1 nA 0 - 70°C; input impedance greater than 50 kilohms.

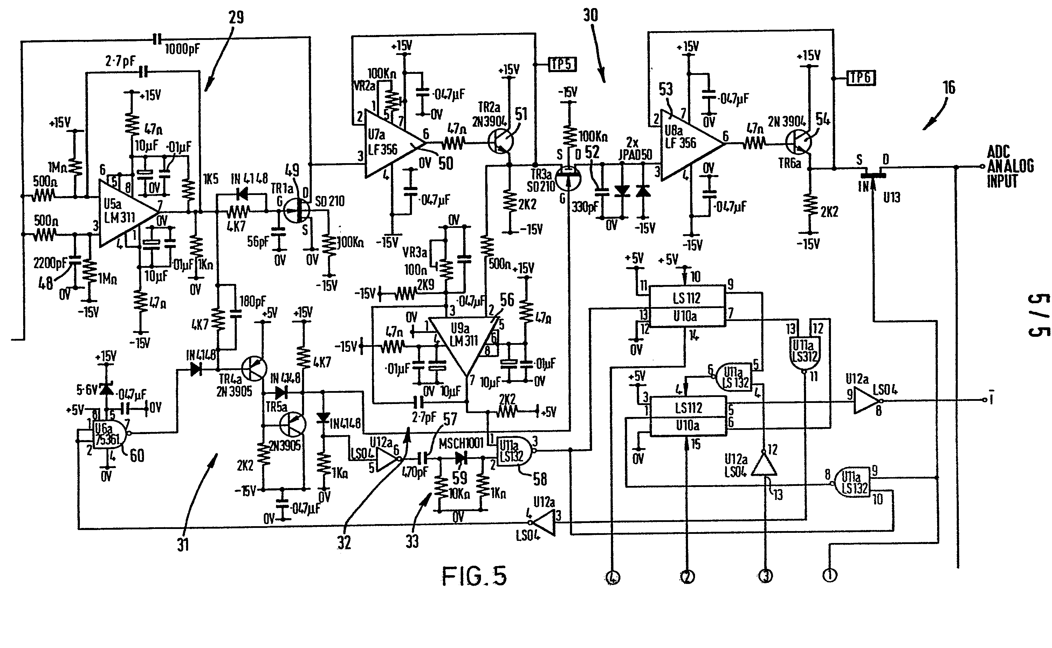

The stages described with reference to Figure 3 are indicated in the detailed circuits of Figures 4 and 5. The constant current source 21 comprises two similar circuits each consisting of a resistor and Zener diode connected between the 150 V and 0 V lines. The 150 V line is switchable between positive and negative polarities and diodes 41 then switch the respective constant current source to the probe. The probe output pulses are a.c.

coupled to the virtual earth input of an operational amplifier 42 via a capacitor 43 which acts to reject low frequency noise from the probe. The output of amplifier stage 23 is applied to an attenuator formed of resistors 44 which are switchable by means of relays RL1, RL2 to provide three ranges, e.g. 0 to 3 microns, 3 to 10 microns and 10 to 20 microns. The signal received from the attenuator 24 is a.c. coupled to a high pass amplifier stage 25, the response of which is tailored by an emitter bypass capacitor 45 connected to pin 7. This stage has a gain of 30 dB and is followed by a bandpass filter 26. The filter output is connected to the input of the third amplifying stage 27 which has a low pass response tailored by a feedback capacitor 46 between pins 6 and 2. The fourth stage of the amplifier is a unity gain inverting amplifier 28 and relay RL3 which provide polarity switching.

The signal from relay RL3 is passed via a catching network 47 to both inputs of a comparator in the d.c. clamp circuit 29. The lower input is phase retarded by means of a capacitor 48 so the output of the comparator switches over on each reversal of the input polarity, or just after and below each peak of a pulse. The comparator output drives an FET switch 49 which clamps the a.c. coupled signal from the catching network 47 to 0 V each time the pulse moves positive, resulting in a negative going pulse relative to 0 V. From the drain of the FET switch 49 the pulse is buffered by an operational amplifier 50 and emitter follower 51 ready to drive a 330 pF capacitor 52 of the sample and hold circuit 30. The stored value on the capacitor 52 is buffered to multiplexer 16 via operational amplifier 53 and emitter follower 54.

As described so far, the circuit will pass both noise spikes and interference pulses to the output of the multiplexer 16. However, noise and interference rejection circuits are also provided. Firstly, noise blanker 32 compares the pulse amplitude with a fixed reference level which is adjusted via potentiometer 55 to prevent the comparator 56 from switching to a logic 1 level on amplifier noise. Secondly, narrow pulses arriving at the amplifier output are rejected by a differentiator circuit 33. If the pulse duration is not wide enough to fully discharge the 470 pF capacitor 57 while it is at a logic 0 then as it swings to 1 the input of the LS132 Schmitt trigger 58 will not reach the required input trigger level and consequently will not toggle the Schmitt output. A diode 59 is included to reduce leakage from the Schmitt input. The second input to the Schmitt gate 58 is from the noise blanker stage 32 and so it follows that for the Schmitt to switch over signifying a "genuine" pulse, the pulse needs to exceed the amplifier noise level and have a duration greater than 8 microseconds. Typical desired pulses from the probe have widths of 10 microseconds.

The remaining circuitry shown in Figure 5 is used to synchronise the probe pulses with the analogue-to-digital converter and microprocessor. It does this by setting a flip-flop in each of four 20 microsecond time intervals until it can be read by the analogue-to-digital converter at the correct time. For the channel shown the output is read when terminal 1 is selected. Pulses arriving during this time are ignored as they cannot be processed. However, pulses arriving at any other time will be stored until they are read. A pulse captured will set the input of the NAND gate 60 shown at the bottom left of Figure 5 to logic 0 thereby putting the sample and hold circuit 30 into the hold mode and locking out any subsequent pulses until the stored pulse has been read out.

Although the invention has been described with reference to a preferred embodiment, many modifications and variations may be made thereto without departing from the scope of the invention. For example, rather than positioning the multiplexer between the signal processing circuitry and the analogue-to-digital converter, it may be positioned at an earlier point in the signal path, for example between amplifier 23 and attenuator 24, thereby reducing the amount of repeated circuitry.

CLAIMS:

1. A method of detecting bacteria in urine comprising passing a sample of urine, which may be diluted, through an orifice of at least 50 microns diameter, deriving an electrical signal by the use of respective electrodes disposed one on each side of the orifice, amplifying the signal using an a.c. amplifying circuit which has a restricted bandwidth, and detecting the peak height of the resulting signal.

2. A method as claimed in claim 1 wherein the diameter of the orifice is of the order of 100 microns.

3. A method as claimed in claim 1 or 2 wherein the amplifying circuit includes a bandpass amplifier and a d.c. restorer.

4. A method as claimed in claim 3 wherein the bandpass amplifier has a bandwidth of substantially 40kHz centred on 30kHz.

5. A method as claimed in any preceding claim wherein the amplifying circuit suppresses the upper harmonics of the electrical signal and rolls off the low frequency response whilst preserving its pulse height.

6. Apparatus for monitoring particles in a liquid by passing the liquid through an orifice disposed between two electrodes, comprising amplifier means arranged to receive pulse signals from the electrodes on the passage of particles through the orifice, the amplifier means having a restricted bandwidth, and a d.c. restorer circuit coupled to the output of the amplifier means and arranged to produce signals indicative of the amplitude of the pulses.

7. Apparatus as claimed in claim 6 wherein the amplifier means suppresses the upper harmonics of each pulse and rolls off the low frequency response whilst preserving the pulse height.

8. Apparatus as claimed in claim 6 or 7 wherein the amplifier means has a bandwidth of substantially 40kHz centered on 30kHz.

9.    Apparatus as claimed in claim 6, 7 or 8 wherein the amplifier means comprises a bandpass filter positioned between two amplifier stages.

10.    Apparatus as claimed in claim 9 wherein the amplifier means comprises in series a high pass filter, a wideband amplifier, a high pass amplifier, a bandpass filter and a low pass amplifier.

11.    Apparatus as claimed in any of claims 6 to 10 wherein the d.c. restorer circuit comprises a circuit for detecting when a peak of a pulse is reached and for then clamping the a.c. coupled pulse to ground.

12.    Apparatus as claimed in any of claims 6 to 11 including a pulse discriminator which is responsive to the pulses which have passed through the amplifying means and operates to reject pulses outside of a predetermined range.

13.    Apparatus as claimed in claim 12 wherein the pulse discriminator is arranged to reject pulses of less than a predetermined amplitude or less than a predetermined duration.

14.    Apparatus as claimed in any of claims 6 to 13 including a constant current source of reversible polarity connected to said electrodes.

15.    Apparatus as claimed in any of claims 6 to 14 including control means for automatically controlling the monitoring of particles, said control means comprising a processing unit for executing instructions stored in a memory and arranged to control the flow of liquid through the orifice, the periodic alternation of the potential applied to the electrodes, the conversion of the amplitude signals to digital values, and the processing of said digital values.

16.    Apparatus for monitoring particles in a liquid by passing the liquid through an orifice disposed between two electrodes, comprising amplifier means arranged to receive pulse signals from the electrodes on the passage of particles through the orifice, the amplifier means including a bandpass amplifier circuit comprising in series a high pass filter, a wideband amplifier, a high pass amplifier, a bandpass filter and a low pass amplifier.

FIG. 1

FIG.2

FIG.3

±150V

21

CALIBRATION
PULSE

1

22

23

17

24

25

26

27

28

POLARITY

29

17'

+6·2V    −6·2V

31

30

16

ANALOGUE
TO ADC

V REF

32

33

PROCESSOR
LOGIC
AND
BUFFER
MEMORY

DATA
TRUE

① ② ③ ④

3/5

0162607

0162607

FIG.4

FIG.5